# EUROPÄISCHE PATENTANMELDUNG

(11) **EP 1 000 818 A1**
(43) Veröffentlichungstag der Anmeldung: **17.05.2000**
(21) Anmeldenummer: 99121534.4
(22) Anmeldetag: 29.10.1999
(51) Int. Cl.: B60R 21/32

(54) **Verfahren zur Steuerung eines aktiven Insassenkopf-Schutzsystems in einem Fahrzeug, insbesondere während eines Rückwärtsmanövers**

(30) Priorität: 11.11.1998 DE 19851981
(71) Anmelder: DaimlerChrysler AG, 70567 Stuttgart (DE)
(72) Erfinder: Eberle, Walter, 73269 Hochdorf (DE); Mitschelen, Rolf, 73230 Kirchheim (DE)

(57) **Zusammenfassung**

1. Verfahren zur Steuerung wenigstens einer aktiven Kopfstütze in einem Fahrzeug.

2.1. Die Erfindung bezieht sich auf ein Verfahren zur Steuerung einer aktiven Kopfstütze in einem Fahrzeug, bei dem die aktive Kopfstütze bei Vorliegen vorgebbarer, fahrzeugaufprallindikativer Auslösebedingungen ausgelöst wird, die das Überschreiten eines vorgebbaren Aufprallschwellwertes durch eine aufprallindikative Kenngröße umfassen.

2.2. Erfindungsgemäß wird der Fahrzustand des Fahrzeugs auf das Vorliegen eines Rückwärtsfahrzustandes überwacht und bei Vorliegen eines vorgebbaren Rückwärtsfahrzustandes die Auslösung der aktiven Kopfstütze gesperrt bzw. der Aufprallschwellwert von einem ansonsten geltenden Normalwert auf einen vorgebbaren Rangiertoleranzwert angehoben, oder es werden die Fahrzeuggeschwindigkeit und mittels einer Annäherungssensorik die Annäherungsgeschwindigkeit von dem Fahrzeug näherkommenden Objekten erfaßt und bei Vorliegen von Rückwärtsfahrt die Auslösung der aktiven Kopfstütze gesperrt oder der Aufprallschwellwert von einem ansonsten geltenden Normalwert auf einen vorgebbaren Rangiertoleranzwert angehoben, wenn die erfaßte Annäherungsgeschwindigkeit unterhalb einer vorgebbaren Annäherungsgeschwindigkeitsschwelle liegt.

2.3. Verwendung z.B.in Automobilen.

## Beschreibung

Die Erfindung betrifft ein Verfahren zur Steuerung eines aktiven Insassenkopf-Schutzsystems mit einem oder mehreren aktiven Kopfschutzelementen in einem Fahrzeug, bei dem das jeweilige aktive Kopfschutzelement bei Vorliegen vorgebbarer fahrzeugaufprallindikativer Auslösebedingungen ausgelöst wird, die das Überschreiten eines vorgebbaren Aufprallschwellwertes durch eine aufprallindikative Kenngröße umfassen. Unter einem aktiven Kopfschutzelement ist dabei ein Schutzelement für den Kopf eines Fahrzeuginsassen zu verstehen, das bei einem Aufprall das bekannte Problem des Auftretens eines Halswirbel-Schleudersyndroms verhindern soll. Derartige Schutzelemente können insbesondere sogenannte aktive Kopfstützen in Form von verschwenkbaren Kopfstützen oder Kopfairbags, aber auch andere geeignete Sicherheitseinrichtungen zur Vermeidung des Halswirbel-Schleudersyndroms sein, wie z.B. eine aktiv nach unten unten schwenkbare Sitzlehne. Diese Schutzelemente können von einem Ausgangszustand aktiv in einen davon verschiedenen Insassenkopf-Schutzzustand gesteuert werden, wenn die betreffenden Auslösebedingungen vorliegen.

Die DE 196 47 660 A1 offenbart eine Auslösevorrichtung für aktive Insassenrückhaltesysteme, wie Gurtstraffer oder Airbags in einem Kraftfahrzeug. Dieser Auslösevorrichtung ist ein Beschleunigungssensor zugeordnet, der im Falle einer Fahrzeugkollision ein Verzögerungssignal bereitstellt. Die Auslösung wenigstens eines der Rückhaltesysteme erfolgt bei Überschreiten einer Auslöseschwelle des Verzögerungssignals. Die Auslösevorrichtung ist weiter mit einer Objekterfassungseinheit verbunden, mit der Hindernisse im Fahrzeugnahbereich erfaßt werden und die zugehörige Relativgeschwindigkeit bestimmt wird. Die Auslöseschwelle wird in Abhängigkeit von der Eigengeschwindigkeit des Fahrzeugs und der Relativgeschwindigkeit erfaßter Hindernisse variiert. Insbesondere wird, wenn kein Hindernis erfaßt wird, mit fallender Eigengeschwindigkeit des Fahrzeugs die Auslöseschwelle angehoben.

Aus der DE 43 34 671 A1 ist ein Rückhaltesystem mit Rückhaltevorrichtung und einer zentralen Steuereinheit bekannt. In der Steuereinheit werden zur Entscheidung über die Auslösung der Rückhaltevorrichtung ein zentraler Beschleunigungssensor und Raddrehzahlsensoren eines Antiblockiersystems (ABS) bewertet. Die Steuereinheit veranlaßt auch bei zunächst geringen Fahrzeugverzögerungen ein Auslösen der Rückhaltevorrichtung für den Fall, daß über die Raddrehzahlsensoren eine relativ große Radverzögerung wenigstens eines Vorderrades festgestellt wird. Hierdurch soll erreicht werden, daß in der Steuereinheit auch bei Problem-Crashs, z.B. weiche Aufpralle, eine rechtzeitige Auslöseentscheidung getroffen wird.

Auch in der DE 37 37 554 A1 ist ein Auslösesystem für aktive Insassenschutzeinrichtungen, wie Gurtstraffer und Airbags, beschrieben, in dem zur Steigerung der Systemzuverlässigkeit auch Informationen aus einem ABS, wie beispielsweise Raddrehzahlinformationen, bewertet werden.

Die DE 39 42 011 A1 offenbart eine Einrichtung zum Auslösen von Sicherheitseinrichtungen für Insassen eines Kraftfahrzeugs, wie Airbags oder Gurtstraffer, in der ein Ausgangssignal eines Beschleunigungssensors in einer Auswerteschaltung dahingehend bewertet wird, ob ein nicht auslöserelevanter Stoß, insbesondere ein "Hammerschlag", auf das Kraftfahrzeug oder eine auslöserelevante Beschleunigung desselben vorliegen. Ferner umfaßt die Auswerteschaltung eine Heckaufprall-Erkennungsschaltung, wobei die Sicherheitseinrichtungen bei einem erkannten Heckaufprall nicht ausgelöst werden sollen.

Die DE 43 35 991 A1 offenbart eine Einrichtung zur Auslösung von Rückhaltemitteln in einem Kraftfahrzeug, in der neben Beschleunigungssensorsignalen auch fahrzeugdynamische Bewegungs- und/oder Zustandsdaten, wie Geschwindigkeit, Bremsbetätigung, Bremsdruck etc. bewertet werden. Diese Signale werden einer zentralen Steuereinheit beispielsweise über einen Datenbus zugeführt und beeinflussen einen Auslösealgorithmus derart, daß bei hohen Fahrzeuggeschwindigkeiten eine schnelle Auslösung der Rückhaltemittel erfolgt und bei Lenkmanövern insbesondere die Richtung des zu erwartenden Aufpralls vorausbestimmt wird.

In der DE 88 16 763 U1 ist eine Vorrichtung zur Auslösung von Rückhaltemitteln beschrieben, die einen Beschleunigungsaufnehmer aufweist, dessen Signale in einem Steuergerät ausgewertet werden und ggf. zur Auslösung eines oder mehrerer Rückhaltemittel führen. Das Steuergerät umfaßt Mittel zur Feststellung der Richtung der auf das Fahrzeug einwirkenden Beschleunigung und damit zur Unterscheidung verschiedener Aufprallarten. Je nach festgestellter Aufprallrichtung werden selektiv geeignete Rückhaltemittel ausgelöst und die übrigen deaktiviert gehalten. Insbesondere unterbleibt eine Auslösung der dort vorgesehenen Rückhaltemittel im Fall eines Heckaufpralls.

Die EP 0 593 845 A1 offenbart einen Kopfairbag mit Auslösevorrichtung, der in der Kopfstütze eines Sitzes untergebracht ist. Die Auslösung des Kopfairbags erfolgt aufgrund des Signales eines Stoßsensors, der bei oder in der Nähe des Fahrzeughecks angeordnet ist und so eine aufprallbedingte Stoßeinwirkung auf den Heckbereich zu detektieren vermag.

In der US 5.605.202 ist ein Insassenrückhaltesystem in einem Fahrzeug beschrieben, bei dem Unfallsensoren, wie etwa Beschleunigungsaufnehmer, Beschleunigungskraftmesser, Trägheitssensoren oder ähnliches, mittels einer Steuervorrichtung ständig überwacht und abgefragt werden. Dies dient zum einen der Funktionsprüfung und zum anderen dazu, gegebenenfalls das Auslösen der Rückhaltemittel zu veranlassen. Da die laufende Überwachung der einwandfreien Funktionsweise der Unfallsensoren zeitintensiv ist und die Reaktionszeit des Insassenrückhaltesystems beeinträchtigt, wertet die Steuervorrichtung neben Signalen von Unfallsensoren Daten zusätzlicher Sensoren aus, die den Bewegungszustand des Fahrzeugs betreffen, wie etwa Raddrehzahl- oder Bremsdrucksensoren. Ergibt sich aus diesen Daten eine unfallgefährliche Situation, so wird die Funktionsüberwachung der Unfallsensoren ausgesetzt und für die Insassenrückhaltesysteme ein Alarmzustand hergestellt, in dem diese unverzüglich auslösen können.

In dem Konferenzband "Airbag 2000", 3. Int. Symp. on Sophisticated Car Occupant Safety Systems, Karlsruhe, Deutschland, 26. und 27. November 1996, wird unter dem Titel "Smart Restraint Management - An Innovative and Comprehensive Concept" von L. Grösch et al. vorgeschlagen, für ein Insassenrückhaltesystem im Frontbereich eines Fahrzeugs einen Sensor vorzusehen, der die Annäherungsgeschwindigkeit eines Aufprallhindernisses mißt. Mit diesem Signal kann die Auslöseschwelle eines zentralen Unfallsensors beeinflußt werden, um eine zeitlich frühere Auslösung von Insassenrückhaltesystemen zu erzielen.

Unter dem Titel "Pre-Crash-Sensoren" wird von H. Spies im selben Konferenzband das Konzept vorgestellt, einer zentralen Steuereinheit für Insassenrückhaltesysteme Signale von Hindernisannäherungssensoren, die im Frontbereich und Heck eines Fahrzeugs vorgesehen sind, Signale von Fahrzeugdynamiksensoren und Fahrzeugdaten aus einem ABS-System, aber auch Daten, die den Zustand der Türverriegelung betreffen, etc. zuzuführen. Diese Daten werden in der zentralen Steuereinheit ausgewertet, worauf die Insassenrückhaltesysteme so angesteuert werden, daß eine stufenweise Zündung derselben entsprechend der Unfallsituation erfolgt und dabei der Fülldruck in Airbags den Erfordernissen angepaßt werden kann.

Der Erfindung liegt als technisches Problem die Bereitstellung eines Verfahrens der eingangs genannten Art zugrunde, mit dem das aktive Kopfschutzelement bei drohender Unfallgefahr zuverlässig ausgelöst werden kann, Fehlauslösungen aufgrund von kleinen Remplern, z.B. beim Rückwärtseinparken und anderen Rangiermanövern, hingegen weitestgehend ausgeschlossen werden.

Dieses Problem wird durch ein Verfahren gemäß Anspruch 1 oder Anspruch 5 gelöst.

Gemäß dem Verfahren nach Anspruch 1 wird der Fahrzustand des Fahrzeugs auf das Vorliegen eines Rückwärtsfahrzustandes überwacht und bei Vorliegen eines vorgebbaren Rückwärtsfahrzustandes die Auslösung des aktiven Kopfschutzelementes gesperrt oder der Aufprallschwellwert von einem ansonsten geltenden Normalwert auf einen vorgebbaren Rangiertoleranzwert angehoben. Zur Vermeidung des Halswirbel-Syndroms ist es günstig, das z.B. als Kopfairbag, aktiv schwenkbare Kopfstütze oder Sitzlehne ausgebildete aktive Kopfschutzelement mit relativ niedriger Auslöseschwelle zu betreiben, damit dieses in einer Unfallsituation den Kopf rechtzeitig abfangen bzw. aufnehmen kann. Mit dem erfindungsgemäßen Steuerverfahren wird die Gefahr von Fehlauslösungen aufgrund der niedrigen Auslöseschwelle bei Rückwärtsfahrtremplern auf Parkplätzen, an Hindernissen oder an Bordsteinen weitestgehend vermieden.

In einem nach Anspruch 2 weitergebildeten Verfahren ist eine notwendige Bedingung für die Sperrung der Auslösung des aktiven Kopfschutzelementes oder die Anhebung des Aufprallschwellwertes, daß ein Rückwärtsgang des Fahrzeugs eingelegt ist, in einem nach dem Anspruch 3 weitergebildeten Verfahren, daß eine Rückwärtsfahrtgeschwindigkeit detektiert wird, die betragsmäßig unter einem vorgebbaren Rangiergeschwindigkeitswert liegt. Auf diese Weise können einfach und kostengünstig Fehlauslösungen des aktiven Kopfschutzelementes, das im normalen Fahrbetrieb eine niedrige Auslöseschwelle besitzt, im Fall von Remplern bei Rückwärtsfahrtmanövern vermieden werden.

In einem nach dem Anspruch 4 weitergebildeten Verfahren ist eine notwendige Bedingung für die Sperrung der Auslösung des aktiven Kopfschutzelementes oder die Anhebung des Aufprallschwellwertes, daß eine Rückwärtsfahrtgeschwindigkeit größer null detektiert wird. Auf diese Weise wird erreicht, daß wenn der Rückwärtsgang zwar schon eingelegt ist, das Fahrzeug aber noch wartend vor einer Parklücke auf der Fahrbahn steht, ein Auslösen des aktiven Kopfschutzelementes dennoch leicht möglich ist.

Gemäß dem Verfahren nach Anspruch 5 werden die Fahrzeugfahrtrichtung und mittels einer Annäherungssensorik die Annäherungsgeschwindigkeit von dem Fahrzeugheck näherkommenden Objekten erfaßt und bei Vorliegen von Rückwärtsfahrt die Auslösung des aktiven Kopfschutzelementes gesperrt oder der Aufprallschwellwert von einem ansonsten geltenden Normalwert auf einen vorgebbaren Rangiertoleranzwert angehoben, wenn die erfaßte Annäherungsgeschwindigkeit von dem Fahrzeug näherkommenden Objekten unterhalb eines vorgebbaren Rangiergeschwindigkeitstoleranzwertes liegt. Auf diese Weise kann eine Fehlauslösung des aktiven Kopfschutzelementes aufgrund von Remplern bei Rangiermanövern, insbesondere auch beim Rückwärtsfahren, an stehenden bzw. sich langsam bewegenden Hindernissen ausgeschlossen werden.

Vorteilhafte Ausführungsformen der Erfindung sind in den Zeichnungen dargestellt und werden nachfolgend beschrieben. Es zeigen:
- Fig. 1: eine schematische Blockdiagrammdarstellung einer ersten Insassenschutzsystem-Steuervorrichtung mit Rückwärtsgangerkennung,
- Fig. 2: eine schematische Blockdiagrammdarstellung einer zweiten Insassenschutzsystem-Steuervorrichtung mit zusätzlichem Geschwindigkeitssensor,
- Fig. 3: eine schematische Blockdiagrammdarstellung einer dritten Insassenschutzsystem-Steuervorrichtung mit richtungsbewertender Geschwindigkeitssensorik und
- Fig. 4: eine schematische Blockdiagrammdarstellung einer zweiten Insassenschutzsystem-Steuervorrichtung mit heckseitiger Annäherungssensorik.

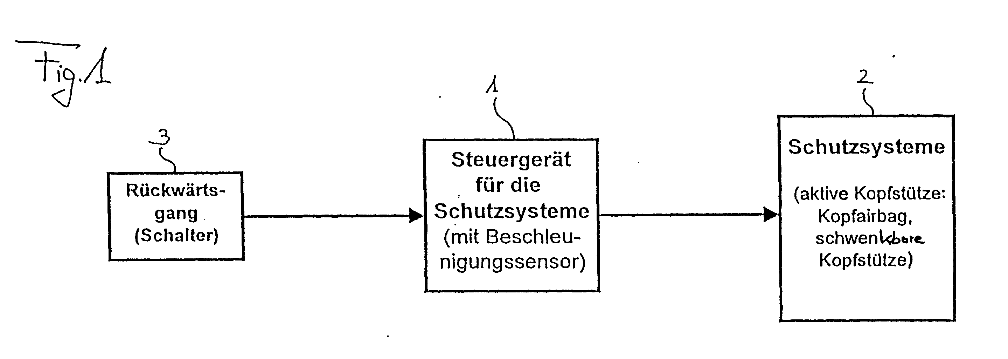

Fig. 1 zeigt in einer schematischen Blockschaltbilddarstellung eine erste Vorrichtung zur Steuerung aktiver Insassenschutzelemente bzw. Schutzsysteme in einem Kraftfahrzeug. Die Vorrichtung weist ein Steuergerät 1 für die Schutzsysteme auf. Dieses Steuergerät 1 liegt z.B. an einer CAN-Busleitung des Kraftfahrzeuges und vermag von dieser Daten zu lesen und auf diese Daten auszugeben. Darüber hinaus umfaßt die Vorrichtung aktive Schutzsysteme 2, insbesondere aktive Kopfschutzelemente, die jeweils eine aktive Kopfstütze, d.h. einen Kopfairbag und/oder eine schwenkbare Kopfstütze, und/oder eine schwenkbare Sitzlehne beinhalten, mit nicht näher dargestellten, herkömmlichen Auslöseeinheiten. Die Auslöseeinheiten für die aktiven Schutzsysteme sind mit dem Steuergerät 1 über eine Zündbusleitung oder Zündsignalleitung verbunden. Die Zündung der Auslöseeinheiten erfolgt aufgrund von vom Steuergerät 1 auf die Zündbus- oder Zündsignalleitung ausgegebenen Signalen.

Das Steuergerät 1 weist einen Beschleunigungssensor auf, dem eine Auswerteschaltung zugeordnet ist. In der Auswerteschaltung werden die Signale des Beschleunigungssensors zur Bildung einer aufprallindikativen Kenngröße aufbereitet, die mit einem Aufprallschwellwert verglichen wird. Dabei werden die Beschleunigungssensorsignale nach einem herkömmlichen Verfahren gefiltert und/oder integriert bzw. abschnittsweise integriert, wie beispielsweise in der DE 196 48 917 und in der DE 41 16 336 beschrieben. Überschreitet die aufprallindikative Kenngröße betragsmäßig diesen Schwellwert, so wird im Steuergerät 1 ein Schutzsystemauslösesignal generiert. Die Vorrichtung beinhaltet weiter einen Rückwärtsgangschalter 3, der bewirkt, daß bei Einlegen des Rückwärtsganges eine Rückwärtsgangeinlegeinformation zum Steuergerät 1 gelangt.

Wenn im Steuergerät 1 das Schutzsystemauslösesignal generiert wird, überprüft das Steuergerät 1, ob ihm eine Rückwärtsgangeinlegeinformation vorliegt oder nicht. Liegt keine Rückwärtsgangeinlegeinformation vor, so gibt das Steuergerät das Schutzsystemauslösesignal aus und bewirkt so die Auslösung eines oder mehrerer der aktiven Schutzsysteme 2. Andernfalls, also bei Vorliegen einer Rückwärtsgangeinlegeinformation, unterbleibt eine Freigabe des Schutzsystemauslösesignals und damit auch ein Auslösen der aktiven Schutzsysteme 2.

Eine Modifikation des oben beschriebenen, von der in Fig. 1 dargestellten Vorrichtung durchgeführten Schutzsystem-Steuerverfahrens besteht darin, eine Abhängigkeit des Aufprallschwellwertes von der Rückwärtsgangeinlegeinformation vorzusehen. Das Vorliegen der Rückwärtsgangeinlegeinformation unterbindet dann nicht die Ausgabe eines Schutzsystemauslöseignals auf die Zündbus- oder Zündsignalleitung, sondern bewirkt, daß im Steuergerät 1 der Schwellwert für die vom Beschleunigungssensor erfaßte Beschleunigung bei vorhandener Rückwärtsgangeinlegeinformation auf einen Rangiertoleranzwert gesetzt wird, der größer ist als der Normalwert des Schwellwertes bei nicht vorhandener Rückwärtsgangeinlegeinformation.

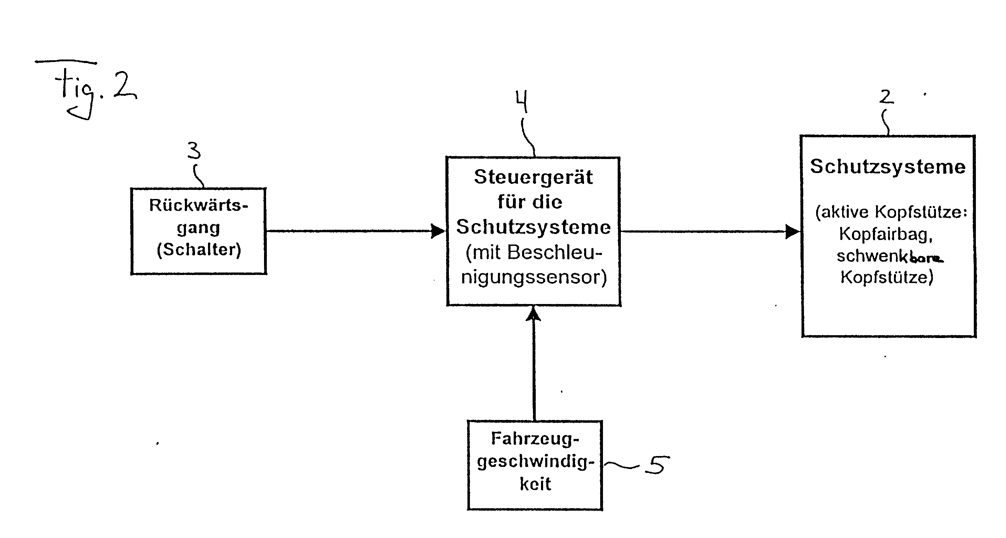

Fig. 2 zeigt eine zweite Vorrichtung zur Steuerung aktiver Insassenschutzelemente bzw. Schutzsysteme in einem Kraftfahrzeug, die weitgehend derjenigen von Fig. 1 entspricht, wobei für funktionell korrespondierende Komponenten gleiche Bezugszeichen verwendet sind. Im Unterschied zum Ausführungsbeispiel von Fig. 1 beinhaltet die in Fig. 2 dargestellte Vorrichtung zusätzlich einen Fahrzeuggeschwindigkeitssensor 5. Dieser Fahrzeuggeschwindigkeitssensor 5 kann beispielsweise von einer Raddrehzahlsensorik gebildet sein, die an ein ABS/ASR-Steuergerät angeschlossen ist, welches das Geschwindigkeitssignal erzeugt und auf den CAN-Bus ausgibt. Das Steuergerät 4 erhält so vom Fahrzeuggeschwindigkeitssensor die Information über die momentane Fahrzeuggeschwindigkeit.

Wenn im Steuergerät 4 das Schutzsystemauslösesignal generiert wird, überprüft das Steuergerät 4, ob die Rückwärtsgangeinlegeinformation vorliegt. Des weiteren bestimmt es dann die sensorisch erfaßte Fahrzeuggeschwindigkeit und vergleicht sie bei Rückwärtsfahrt mit einem Schwellwert für Rückwärtsfahrt, der einen Rangiergeschwindigkeitstoleranzwert darstellt. In einem nächsten Schritt wird, wenn keine Rückwärtsfahrt vorliegt, d.h. der Rückwärtsgang nicht eingelegt ist, das Schutzsystemauslösesignal für die Auslöseeinheiten der Schutzsysteme 2 auf die Zündbus- oder Zündsignalleitung gegeben. Andernfalls erfolgt keine Ausgabe eines Schutzsystemauslösesignals.

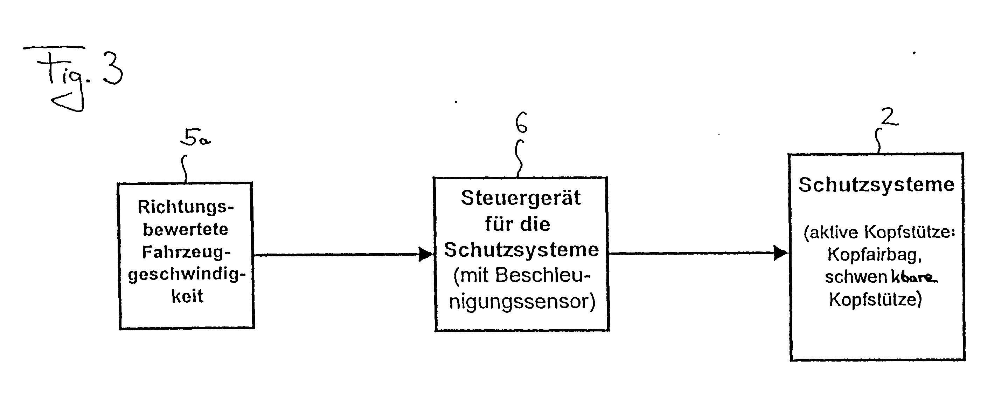

Fig. 3 zeigt in schematischer Blockschaltbilddarstellung eine dritte Vorrichtung zur Steuerung aktiver Insassenschutzelemente bzw. Schutzsysteme in einem Kraftfahrzeug. Die Vorrichtung umfaßt ein Steuergerät 6, das entsprechend den beiden anhand der Fig. 1 und 2 beschriebenen Ausführungsbeispielen einen Beschleunigungssensor aufweist und mit der CAN-Busleitung des Kraftfahrzeugs verbunden ist. Die Vorrichtung beinhaltet ferner aktive Schutzsysteme 2 mit zugehörigen Auslöseeinheiten entsprechend den Beispielen von Fig. 1 und Fig. 2. Die in Fig. 3 dargestellte Vorrichtung beinhaltet einen richtungsbewertenden Fahrzeuggeschwindigkeitssensor 5a, der wiederum über die CAN-Busleitung mit dem Steuergerät 6 verbunden ist und zusätzlich zum Betrag auch die Richtung der Fahrzeuggeschwindigkeit, d.h. ob das Fahrzeug vorwärts oder rückwärts fährt, zu erkennen vermag. In einer Auswerteschaltung wird im Steuergerät 6 die auf dem vom Beschleunigungssystem erfaßten Beschleunigungssignal beruhende aufprallindikative Kenngröße mit einem Aufprallschwellwert verglichen. Überschreitet die aufprallindikative Kenngröße diesen Schwellwert, so wird im Steuergerät 6 die vom Fahrzeuggeschwindigkeitssensor 5a erfaßte Fahrzeuggeschwindigkeit hinsichtlich Betrag und Richtung analysiert. Wenn dadurch Rückwärtsfahrt festgestellt wird, wird der Geschwindigkeitsbetrag mit einem Rückwärtsfahrtgeschwindigkeitsschwellwert verglichen. Bei generiertem Schutzsystemauslösesignal wird dieses vom Steuergerät 6 nur dann auf die Zündbus- oder Zündsignalleitung ausgegeben, wenn die aufprallindikative Kenngröße den Aufprallschwellwert überschritten hat und eine Rückwärtsfahrt mit einer Geschwindigkeit größer als der Rückwärtsfahrtgeschwindigkeitsschwellwert vorliegt. Andernfalls, also für den Fall, daß zwar Rückwärtsfahrt vorliegt, deren Geschwindigkeit aber geringer ist als der Schwellwert für Rückwärtsfahrt, erfolgt selbst dann, wenn eine aufprallindikative Kenngröße gebildet wird, die betragsmäßig über dem Aufprallschwellwert liegt, keine Ausgabe eines Sicherheitssystemauslösesignals.

Eine Modifikation des von der in Fig. 3 dargestellten Vorrichtung durchgeführten Steuerverfahrens besteht darin, eine Abhängigkeit des Aufprallschwellwertes für die aufprallindikative Kenngröße von der momentanen Fahrzeuggeschwindigkeit vorzusehen. Dazu legt das Steuergerät 6 den Aufprallschwellwert in Abhängigkeit vom ermittelten Fahrzeuggeschwindigkeitswert entsprechend einer in einem Speicher abgelegten Kurve fest, so daß beispielsweise bei Rangiergeschwindigkeiten mit einem Betrag von bis zu 10 km/h der Aufprallschwellwert einem Rangiertoleranzwert entspricht, der größer ist als der Normalwert des Aufprallschwellwertes bei Fahrzeuggeschwindigkeiten, die diesen Betrag übersteigen.

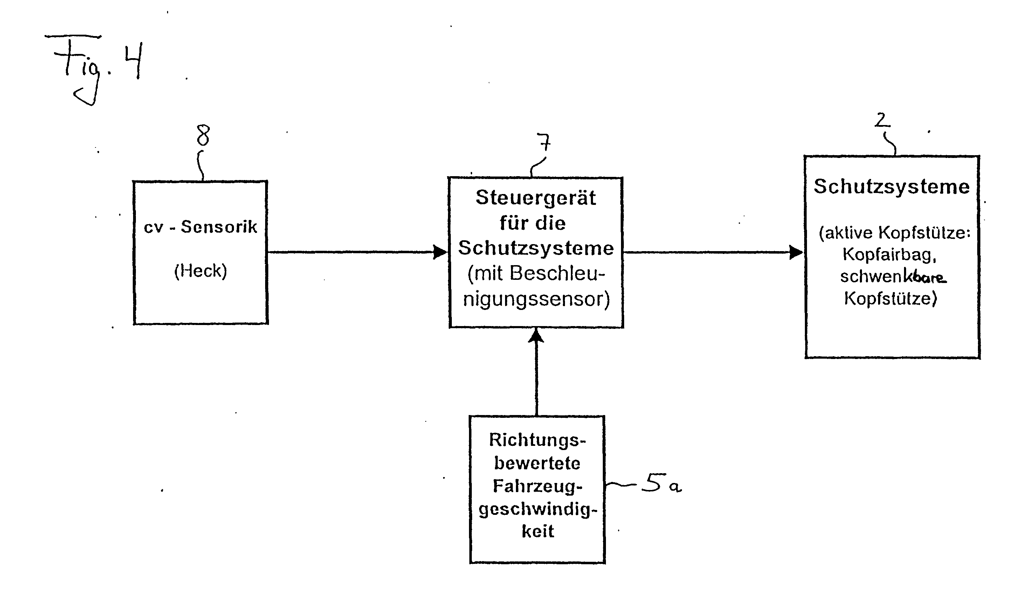

Fig. 4 zeigt in schematischer Blockschaltbilddarstellung eine vierte Vorrichtung zur Steuerung eines aktiven Insassenschutzsystems in einem Kraftfahrzeug. Die Vorrichtung beinhaltet entsprechend den drei zuvor beschriebenen Ausführungsformen ein Steuergerät 7, das an der CAN-Busleitung des Kraftfahrzeugs liegt. Über Zündbus- oder Zündsignalleitungen werden vom Steuergerät 7 Auslöseeinheiten für aktive Schutzsysteme 2 aufgrund von Schutzsystemauslösesignalen gezündet. Ferner umfaßt die Vorrichtung einen richtungsbewertenden Fahrzeuggeschwindigkeitssensor 5a und einen beispielsweise als Radarsensor ausgebildeten Heckhindernis-Relativgeschwindigkeitssensor 8, der die relative Annäherungsgeschwindigkeit eines Hindernisses an das Fahrzeugheck erfaßt. Fahrzeuggeschwindigkeitssensor 5a und Heckhindernis-Relativgeschwindigkeitssensor 8 sind mit dem Steuergerät 7 über die CAN-Busleitung verbunden und leiten diesem die entsprechenden Meßinformationen zu.

Aufgrund der erfaßten Fahrzeuggeschwindigkeit wird im Steuergerät 7 ein Aufprallschwellwert entsprechend einer in einem Speicher abgelegten Kurve, beispielsweise einer stufig von einem Normalwert bei höheren Geschwindigkeiten auf einen Rangiertoleranzwert bei niedrigeren Geschwindigkeiten ansteigenden Kurve, gesetzt. Bevorzugt ist dieser Aufprallschwellwert bei negativer Fahrzeuggeschwindigkeit, d.h. Rückwärtsfahrt, größer als bei positiver Fahrzeuggeschwindigkeit, d.h. Vorwärtsfahrt. Alternativ ist auch eine Abhängigkeit des Aufprallschwellwertes von sowohl der Annäherungsgeschwindigkeit eines Hindernisses an das Fahrzeugheck als auch der Fahrzeuggeschwindigkeit möglich. So kann bei negativer Fahrzeuggeschwindigkeit und einer Annäherungsgeschwindigkeit eines Hindernisses an das Fahrzeugheck, die geringer ist als eine erste Annäherungsgeschwindigkeitsschwelle bei z.B. 15 km/h, der Aufprallschwellwert gegenüber einem Normalwert angehoben werden, während bei einer Annäherungsgeschwindigkeit eines Hindernisses an das Fahrzeugheck unterhalb dieser Schwelle und beliebiger Fahrzeuggeschwindigkeit eine solche Anhebung unterbleibt.

Eine Modifikation der oben beschriebenen Abhängigkeit des Aufprallschwellwertes von sowohl der Annäherungsgeschwindigkeit des Hindernisses an das Fahrzeugheck als auch der Fahrzeuggeschwindigkeit kann darin bestehen, daß der Aufprallschwellwert auch dann angehoben wird, wenn bei Vorwärtsfahrt die Annäherungsgeschwindigkeit eines Hindernisses an das Fahrzeugheck eine zweite Annäherungsgeschwindigkeitsschwelle bei z.B. 8 km/h unterschreitet.

Wie in den drei zuvor beschriebenen Ausführungsformen wird in dem Steuergerät 7 in einer Auswerteschaltung die auf einem Beschleunigungssensorsignal beruhende aufprallindikative Kenngröße mit diesem Schwellwert verglichen. Überschreitet die aufprallindikative Kenngröße den Aufprallschwellwert, so wird im Steuergerät 7 ein Schutzsystemauslösesignal generiert. Die Annäherungsgeschwindigkeit eines Hindernisses an das Fahrzeugheck wird im Steuergerät 7 mit einem Schwellwert für die Annäherungsgeschwindigkeit verglichen, der in Abhängigkeit von Betrag und Vorzeichen der Fahrzeuggeschwindigkeit entsprechend einer in einem Speicher abgelegten Kurve festgelegt wird, so daß beispielsweise bei negativen Fahrzeuggeschwindigkeiten mit einem Betrag von bis zu 10 km/h oder 15 km/h der Schwellwert für die Annäherungsgeschwindigkeit größer ist als bei demgegenüber positiven Fahrzeuggeschwindigkeiten. Eine Ausgabe des Schutzsystemauslösesignals für die Auslöseeinheiten der Schutzsysteme 2 auf die Zündbus- oder Zündsignalleitung erfolgt vom Steuergerät 7 im Fall eines sich heckseitig nähernden Objektes somit nur dann, wenn im Steuergerät 7 sowohl das Beschleunigungssensorsignal als auch die mittels des Heckhindernis-Relativgeschwindigkeitssensors 8 erfaßte Annäherungsgeschwindigkeit des Objektes an das Fahrzeugheck ihren jeweiligen Schwellwert überschritten haben.

Eine Modifikation des von der in Fig. 4 dargestellten Vorrichtung durchgeführten Steuerverfahrens besteht darin, lediglich den Schwellwert für die Annäherungsgeschwindigkeit eines Hindernisses an das Fahrzeugheck oder den Aufprallschwellwert in Abhängigkeit von der positiven oder negativen Fahrzeuggeschwindigkeit variabel festzulegen.

Es versteht sich, daß die vorliegende Erfindung nicht auf die oben beschriebenen Ausführungsformen beschränkt ist. Beispielsweise ist es in den in Fig. 3 und 4 dargestellten Ausführungsformen möglich, die dem Steuergerät 6, 7 vom Fahrzeuggeschwindigkeitssensor 5a zugeführte Information einer richtungsbewerteten Fahrzeuggeschwindigkeit durch die Information einer richtungsunbewerteten Fahrzeuggeschwindigkeit in Verbindung mit der Rückwärtsgangeinlegeinformation zu ersetzen. In einem weiteren modifizierten Ausführungsbeispiel ist vorgesehen, in dem Steuergerät zusätzlich oder anstelle der bisher beschriebenen Sensorsignale das Signal eines Beschleunigungssensors, der am Fahrzeugheck angeordnet ist, und/oder das Signal eines im Stoßfänger des Kraftfahrzeugs untergebrachten Drucksensors zur Beeinflussung der Auslöseentscheidung durch das Steuergerät zuzuführen.

In einer weiteren modifizierten Ausführungsform wird dem Steuergerät ein Bremsaktivierungssignal zugeführt, das ein Maß für die von den Fahrzeugbremsen aufgebrachte Bremskraft darstellt. Aus diesem Bremsaktivierungssignal wird im Steuergerät eine hypothetische Vorverlagerung der Fahrzeuginsassen berechnet, aus der sich dann der tatsächliche Abstand des Kopfes eines Fahrzeuginsassen zur Kopfstütze ermitteln läßt. Entsprechend diesem Abstand wird den Auslöseeinheiten der Schutzsysteme, insbesondere der Auslöseeinheit für die Kopfstütze zusätzlich zum Schutzsystemauslösesignal ein Volumensignal zugeführt, aufgrund dessen ein Airbag in der Kopfstütze mit einem geeigneten Gasvolumen beaufschlagt oder ein Nachführen der aktiv schwenkbaren Kopfstütze nach vorne bewirkt wird, um so ein Zurückschleudern des Kopfes zu verringern bzw. zu unterbinden. Gemäß dieser Ausführungsform kann ein Halswirbelsyndrom der Fahrzeuginsassen auch beim Bremsen oder bei einem Auffahrunfall vor einem anschließenden Heckaufprall gemindert bzw. vermieden werden.

Die in der vorstehenden Beschreibung erwähnten Systemkomponenten sind in ihrem Aufbau und ihrer Funktionsweise, soweit hierauf vorliegend nicht näher eingegangen wurde, von einem beliebigen herkömmlichen Typ. Dies gilt sowohl für die verwendbaren Insassenschutzsysteme als auch die diversen erwähnten Beschleunigungs- und Geschwindigkeitssensoren und die Rückwärtsfahrterkennung. Das zugehörige Steuergerät ist jeweils so ausgelegt, daß es in der Lage ist, das erfindungsgemäße Verfahren durchzuführen, wie erläutert.

Wie aus den beschriebenen Beispielen deutlich wird, ermöglicht die vorliegende Erfindung eine zuverlässige Auslösung der vorhandenen Insassenschutzsysteme bei beliebiger Aufprallrichtung, wobei speziell bei heckseitigen Einwirkungen eine Unterscheidung eines echten Heckaufpralls, bei dem die Schutzsysteme ausgelöst werden, von harmlosen Remplern, wie sie beim Rückwärtsmanövrieren auftreten, ermöglicht wird. Fehlauslösungen der Schutzsysteme durch Rempler beim Einparken oder durch Überfahren eines Bordsteins werden vermieden, während im übrigen relativ niedrige Auslöseschwellen gesetzt sein können, um z.B. das bekannte Schleudertrauma, das gerade auch bei leichten Heckaufprallunfällen mit Aufprallgeschwindigkeiten zwischen ca. 10 km/h und 40 km/h auftritt, mittels einer geeignet angesteuerten aktiven Kopfstütze zu verhindern.

## Patentansprüche

1. Verfahren zur Steuerung eines aktiven Insassenkopf-Schutzsystems in einem Fahrzeug, bei dem
- wenigstens ein aktives Kopfschutzelement bei Vorliegen vorgebbarer, fahrzeugaufprallindikativer Auslösebedingungen ausgelöst wird, die das Überschreiten eines vorgebbaren Aufprallschwellwertes durch eine aufprallindikative Kenngröße umfassen,
**dadurch gekennzeichnet**, daß
- der Fahrzustand des Fahrzeugs auf das Vorliegen eines Rückwärtsfahrzustandes überwacht wird und
- bei Vorliegen eines vorgebbaren Rückwärtsfahrzustandes die Auslösung des aktiven Kopfschutzelementes gesperrt oder der Aufprallschwellwert von einem ansonsten geltenden Normalwert auf einen vorgebbaren Rangiertoleranzwert angehoben wird.

2. Verfahren nach Anspruch 1, weiter
**dadurch gekennzeichnet**, daß
eine notwendige Bedingung für die Sperrung der Auslösung des aktiven Kopfschutzelementes oder die Anhebung des Aufprallschwellwertes ist, daß ein Rückwärtsgang des Fahrzeugs eingelegt ist.

3. Verfahren nach Anspruch 1 oder 2, weiter
**dadurch gekennzeichnet**, daß
eine notwendige Bedingung für die Sperrung der Auslösung des aktiven Kopfschutzelementes oder die Anhebung des Aufprallschwellwertes ist, daß eine Rückwärtsfahrtgeschwindigkeit detektiert wird, die betragsmäßig unter einem vorgebbaren Rangiergeschwindigkeitstoleranzwert liegt.

4. Verfahren nach einer der Ansprüche 1 bis 3, weiter
**dadurch gekennzeichnet**, daß
eine notwendige Bedingung für die Sperrung der Auslösung des aktiven Kopfschutzelementes oder die Anhebung des Aufprallschwellwertes ist, daß eine Rückwärtsfahrtgeschwindigkeit größer null detektiert wird.

5. Verfahren zur Steuerung eines aktiven Insassenkopf-Schutzsystems in einem Fahrzeug, bei dem
- wenigstens ein aktives Kopfschutzelement bei Vorliegen vorgebbarer, fahrzeugaufprallindikativer Auslösebedingungen ausgelöst wird, die das Überschreiten eines vorgebbaren Aufprallschwellwertes durch eine aufprallindikative Kenngröße umfassen,
**dadurch gekennzeichnet**, daß
- die Fahrtrichtung des Fahrzeugs und mittels einer Annäherungssensorik die Annäherungsgeschwindigkeit von dem Fahrzeugheck näherkommenden Objekten erfaßt werden und
- bei Vorliegen von Rückwärtsfahrt die Auslösung des aktiven Kopfschutzelementes gesperrt oder der Aufprallschwellwert von einem ansonsten geltenden Normalwert auf einen vorgebbaren Rangiertoleranzwert angehoben wird, wenn die erfaßte Annäherungsgeschwindigkeit von dem Fahrzeug näherkommenden Objekten unterhalb einer vorgebbaren ersten Annäherungsgeschwindigkeitsschwelle liegt.

6. Verfahren nach Anspruch 5, weiter
**dadurch gekennzeichnet**, daß
die Auslösung auch dann gesperrt oder der Aufprallschwellwert auch dann angehoben wird, wenn bei Vorwärtsfahrt die Annäherungsgeschwindigkeit eines Hindernisses an das Fahrzeugheck eine zweite Annäherungsgeschwindigkeitsschwelle unterschreitet.

7. Verfahren nach Anspruch 5 oder 6, weiter
**dadurch gekennzeichnet**, daß
die Auslösung des aktiven Kopfschutzelementes gesperrt oder der Aufprallschwellwert angehoben wird, wenn zusätzlich die Fahrzeuggeschwindigkeit unterhalb eines vorgebbaren Rangiertoleranzwertes liegt.
